(19)

Europäisches Patentamt

European Patent Office

Office européen des brevets

(11) **EP 4 607 855 A1**

(12) **EUROPEAN PATENT APPLICATION**
published in accordance with Art. 153(4) EPC

(43) Date of publication:
  **27.08.2025  Bulletin 2025/35**

(21) Application number: **23881853.8**

(22) Date of filing: **24.10.2023**

(51) International Patent Classification (IPC):
  **H04L 12/12** *(2006.01)*

(52) Cooperative Patent Classification (CPC):
  **H04L 12/12;** Y02D 30/70

(86) International application number:
  **PCT/CN2023/126299**

(87) International publication number:
  **WO 2024/088276 (02.05.2024 Gazette 2024/18)**

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **KH MA MD TN**

(30) Priority:  **25.10.2022  CN 202211314077**

(71) Applicant: **Huawei Technologies Co., Ltd.
  Shenzhen, Guangdong 518129 (CN)**

(72) Inventors:
  • **DING, Li
   Shenzhen, Guangdong 518129 (CN)**

  • **SUN, Desheng
   Shenzhen, Guangdong 518129 (CN)**
  • **ZHANG, Chengmin
   Shenzhen, Guangdong 518129 (CN)**
  • **LIU, Yongzhi
   Shenzhen, Guangdong 518129 (CN)**
  • **WANG, Qing
   Shenzhen, Guangdong 518129 (CN)**

(74) Representative: **Grünecker Patent- und
  Rechtsanwälte
  PartG mbB
  Leopoldstraße 4
  80802 München (DE)**

(54) **POWER MANAGEMENT METHOD, AND NETWORK DEVICE, STORAGE MEDIUM AND PROGRAM PRODUCT**

(57)  Embodiments of the present disclosure provide a power consumption management method, a network device, a storage medium, and a program product. The method may include: A network device determines a length of a time slice, where the length of the time slice is used to set a state of at least one physical layer interface of the network device, the length of the time slice includes an active time period, a low power idle time period, and a wake-up time period, the physical layer interface is in a working state in the active time period, the physical layer interface is in a low power idle state in the low power idle time period, and the wake-up time period is used for the physical layer interface to switch from the low power idle state to the working state; and the network device sets the state of the at least one physical layer interface based on the length of the time slice. Embodiments of the present disclosure can achieve, in a low load condition, an energy-saving effect independent of a traffic arrival mode.

*200*

A network device determines a length of a time slice, where the length of the time slice is used to set a state of at least one physical layer interface of the network device, and the length of the time slice includes an active time period, a low power idle time period, and a wake-up time period — 201

The network device sets the state of the at least one physical layer interface based on the length of the time slice — 202

FIG. 2

EP 4 607 855 A1

**Description**

**TECHNICAL FIELD**

This application relates to the field of computer technologies or the field of communication technologies, and more specifically, to a power consumption management method, a network device, a computer-readable storage medium, and a computer program product.

**BACKGROUND**

Network utilization of most personal computers (PCs) and common servers is less than 1%. When there is no traffic, an Ethernet physical layer still sends an IDLE code block stream, and therefore still normally consumes power. Therefore, the institute of electrical and electronics engineers (IEEE) 802.3 standardized an energy-efficient Ethernet (EEE) technology in 2010. A basic idea of the EEE technology is to complete data transmission as quickly as possible and enter a low power idle (LPI) state. In the LPI state, an unused circuit of a chip is disabled as much as possible to reduce power consumption. When there is a packet to be sent, a physical layer (PHY) is in an active (Active) state. In this case, traffic can be transmitted normally. When there is no packet to be sent, the PHY enters a sleep (Sleep) state immediately. In this state, if there is still no packet to be sent, the PHY enters a quiet (namely LPI) state. To ensure that parameters at two ends are updated synchronously, the PHY enters a refresh (Refresh) phase at an interval. Power consumption can be reduced only in an LPI phase. Power consumption in the active/sleep/refresh state is the same as that in the active state. An energy-saving effect of the EEE depends on a packet arrival mode. When the packet arrival mode is insufficient for the PHY to enter the LPI state, the energy-saving effect achievable through the EEE is quite limited.

**SUMMARY**

This application provides a technical solution for power consumption management.

According to a first aspect of this application, a power consumption management method is provided. The method may include: A network device determines a length of a time slice, where the length of the time slice is used to set a state of at least one physical layer interface of the network device, the length of the time slice includes an active time period, a low power idle time period, and a wake-up time period, the physical layer interface is in a working state in the active time period, the physical layer interface is in a low power idle state in the low power idle time period, and the wake-up time period is used for the physical layer interface to switch from the low power idle state to the working state; and the network device sets the state of the at least one physical layer interface based on the length of the time slice.

Through implementation of the method in the first aspect, a state of a physical layer may be triggered to change based on time, so that a time when the physical layer is in a low power idle state is controllable, and uncertainty of traffic-based triggering is reduced. Compared with an existing solution, for traffic that arrives intermittently, the physical layer may be kept in a working state as much as possible, thereby reducing power consumption.

In some embodiments of the first aspect, the length of the time slice is equal to a sum of the active time period, the low power idle time period, and the wake-up time period. Therefore, the length of the time slice includes three different time periods.

In some embodiments of the first aspect, the setting the state of the at least one physical layer interface includes: The network device cyclically sets the state of the physical layer interface based on lengths of a plurality of time slices, where the length of the time slice is one of the lengths of the plurality of time slices. Therefore, the network device may cyclically set the state of the physical layer interface based on a same length of a time slice.

In some embodiments of the first aspect, the cyclically setting the state of the physical layer interface based on a plurality of time slices includes: The network device configures lengths of an active time period, a low power idle time period, and a wake-up time period of each of the plurality of time slices based on a rate of the physical layer interface; and for each time period of the plurality of time slices, the network device sets the state of the physical layer interface based on the active time period, the low power idle time period, and the wake-up time period. Therefore, the network device may flexibly adjust the length of the time slice and the length of the time period.

In some embodiments of the first aspect, each of the plurality of time slices has a same length. Therefore, the network device may uniformly set a length of a time slice within a specific time.

In some embodiments of the first aspect, the method further includes: If the network device determines that a length of a last time slice in the lengths of the plurality of time slices ends, the network device adjusts a length of the active time period, the low power idle time period, or the wake-up time period in the time slice based on a traffic load; and the network device configures the working state of the physical layer interface based on an adjusted length of the active time period, the low power idle time period, or the wake-up time period. Therefore, the network device may adjust the length of the time slice and the length of the time period after a specific time.

In some embodiments of the first aspect, that the network device adjusts the active time period in the time slice based on a predicted traffic load in a given time slice includes: setting a second ratio of the active time period in the time slice based on a first ratio of a traffic load of one physical layer interface of the network device to the rate of the physical layer interface. Therefore, the network device may meet requirements for sending data and reducing power consumption.

In some embodiments of the first aspect, the first ratio is the same as the second ratio, or the first ratio is less than the second ratio. Therefore, the network device may ensure data sending.

In some embodiments of the first aspect, that the network device sets the state of the at least one physical layer interface based on the length of the time slice includes at least one of the following: The network device configures a time period with traffic as corresponding to the active time period; and the network device configures a time period without traffic as corresponding to the low power idle time period and/or the wake-up time period. Therefore, the network device may correspondingly set a relationship between a corresponding time period and the state of the physical layer.

According to a second aspect of this application, a network device is provided. The network device includes at least one processor and at least one memory. The at least one memory is coupled to the at least one processor and stores instructions that are used to be executed by the at least one processor. When the instructions are executed by the at least one processor, the network device is enabled to determine a length of a time slice, where the length of the time slice is used to set a state of at least one physical layer interface of the network device, the length of the time slice includes an active time period, a low power idle time period, and a wake-up time period, the physical layer interface is in a working state in the active time period, the physical layer interface is in a low power idle state in the low power idle time period, and the wake-up time period is used for the physical layer interface to switch from the low power idle state to the working state; and the network device is enabled to set the state of the at least one physical layer interface based on the length of the time slice.

Through implementation of the network device in the second aspect, a state of a physical layer may be triggered to change based on time, so that a time when the physical layer is in a low power idle state is controllable, and uncertainty of traffic-based triggering is reduced. Compared with an existing solution, for traffic that arrives intermittently, the physical layer may be kept in a working state as much as possible, thereby reducing power consumption.

In some embodiments of the second aspect, the length of the time slice is equal to a sum of the active time period, the low power idle time period, and the wake-up time period. Therefore, the network device may cyclically set the state of the physical layer interface based on a same length of a time slice.

In some embodiments of the second aspect, the setting the state of the at least one physical layer interface includes: The network device cyclically sets the state of the physical layer interface based on lengths of a plurality of time slices, where the length of the time slice is one of the lengths of the plurality of time slices. Therefore, the network device may cyclically set the state of the physical layer interface based on a same length of a time slice.

In some embodiments of the second aspect, the cyclically setting the state of the physical layer interface based on a plurality of time slices includes: The network device configures lengths of an active time period, a low power idle time period, and a wake-up time period of each of the plurality of time slices based on a rate of the physical layer interface; and for each time period of the plurality of time slices, the network device sets the state of the physical layer interface based on the active time period, the low power idle time period, and the wake-up time period. Therefore, the network device may flexibly adjust the length of the time slice and the length of the time period.

In some embodiments of the second aspect, each of the plurality of time slices has a same length. Therefore, the network device may uniformly set a length of a time slice within a specific time.

In some embodiments of the second aspect, if the network device determines that a length of a last time slice in the lengths of the plurality of time slices ends, the network device adjusts a length of the active time period, the low power idle time period, or the wake-up time period in the time slice based on a traffic load; and the network device configures the working state of the physical layer interface based on an adjusted length of the active time period, the low power idle time period, or the wake-up time period. Therefore, the network device may adjust the length of the time slice and the length of the time period after a specific time.

In some embodiments of the second aspect, that the network device adjusts the active time period in the time slice based on a traffic load includes: setting a second ratio of the active time period in the time slice based on a first ratio of a traffic load of one physical layer interface of the network device to the rate of the physical layer interface. Therefore, the network device may meet requirements for sending data and reducing power consumption.

In some embodiments of the second aspect, the first ratio is the same as the second ratio, or the first ratio is less than the second ratio. Therefore, the network device may ensure data sending.

In some embodiments of the second aspect, that the network device sets the state of the at least one physical layer interface based on the length of the time slice includes at least one of the following: The network device configures a time period with traffic as corresponding to the active time period; and the network device configures a time period without traffic as corresponding to the low power idle time period and/or the wake-up time period. Therefore, the network device may correspondingly set a relationship between a corresponding time period and the state of the physical layer.

According to a third aspect of this application, a computer-readable storage medium is provided. The computer-readable storage medium stores computer-executable instructions. When the computer-executable instructions are executed by a processor, an operation of the method according to any one of the first aspect or embodiments of the first aspect is implemented.

According to a fourth aspect of this application, a computer program product is provided. The computer program product includes computer-executable instructions. When the computer-executable instructions are executed, an operation of the method according to any one of the first aspect or embodiments of the first aspect is implemented.

Through implementation of the foregoing aspects, a state of a physical layer may be triggered to change based on time, so that a time when the physical layer is in a low power idle state is controllable, and uncertainty of traffic-based triggering is reduced. Compared with an existing solution, for traffic that arrives intermittently, the physical layer may be kept in a working state as much as possible, thereby reducing power consumption. In addition, duration that the physical layer is in the working state is adjusted based on a traffic load, so that power consumption increases proportionally with traffic; and a traffic mode is adapted to the state of the physical layer as much as possible by means such as traffic control. When there is traffic, the traffic mode corresponds to the working state of the physical layer, and when there is no traffic, the traffic mode corresponds to the low power idle state of the physical layer, thereby maximizing power saving.

## BRIEF DESCRIPTION OF DRAWINGS

With reference to the accompanying drawings and the following detailed descriptions, the foregoing and other features, advantages, and aspects of embodiments of the present disclosure become more apparent. In the accompanying drawings, same or similar reference numerals indicate same or similar elements.

FIG. 1A is an example scenario in which some example embodiments of the present disclosure may be implemented;
FIG. 1B is a scenario in which an embodiment according to this application may be applied;
FIG. 1C is a diagram of possible processing at a physical layer according to this application;
FIG. 1D is a diagram of possible bit coding according to this application;
FIG. 2 is a flowchart of an energy-saving method according to a possible implementation of this application;
FIG. 3 is a diagram of time slice switching according to a possible implementation of this application;
FIG. 4 is a diagram of time slice adjustment according to a possible implementation of this application;
FIG. 5 is a diagram of state machine switching in an energy-saving method according to a possible implementation of this application;
FIG. 6 is a diagram of a possible system architecture according to an embodiment of this application;
FIG. 7 is a diagram of another possible system architecture according to an embodiment of this application;
FIG. 8 is a diagram of a relationship between power consumption and a load according to an embodiment of this application;
FIG. 9 is different configuration parameters and corresponding results according to an embodiment of this application;
FIG. 10 is a diagram of a relationship between power consumption and a load according to another embodiment of this application;
FIG. 11 is different configuration parameters and corresponding results according to another embodiment of this application;
FIG. 12 is a diagram of a relationship between power consumption and a load according to still another embodiment of this application;
FIG. 13 is different configuration parameters and corresponding results according to still another embodiment of this application; and
FIG. 14 is a diagram of a structure of a device according to an example embodiment of this application.

## DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

Terms used in the following embodiments of this application are merely intended to describe specific embodiments, but are not intended to limit this application. As used in this specification and the claims of this application, a singular expression form, "one", "a", "said", "foregoing", "the", or "this", is intended to also include a plural expression form, unless clearly indicated to the contrary in the context. It should also be understood that the term "and/or" used in this application means and includes any or all possible combinations of one or more listed items.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". It should be understood that expressions such as "first", "second", and "third" are merely intended to indicate that a plurality of objects may be different, but it is not excluded that two objects are the same. The expressions such as "first", "second", and "third" should not be construed as any limitation on embodiments. The terms "first" and "second" are merely intended for a purpose of description, and shall not be understood as an indication or implication of relative importance or an implicit indication of a quantity of indicated technical features. Therefore, a feature limited by "first" and "second" may explicitly or implicitly include one or more features. In the descriptions of embodiments of this application, unless otherwise designated, "a plurality of" means two or more. Other explicit and implicit definitions may also be included below.

An "embodiment" mentioned in this application indicates that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this application may be combined with other embodiments.

Network utilization of most PCs and common servers is less than 1%. When there is no traffic, an Ethernet physical layer still sends an IDLE code block stream, and therefore still normally consumes power. Therefore, the IEEE 802.3 standardized an EEE technology in 2010. A basic idea of the EEE technology is to complete data transmission as quickly as possible and enter an LPI state. In the LPI state, an unused circuit of a chip is disabled as much as possible to reduce power consumption. The basic idea of the EEE technology is to complete data transmission as quickly as possible and enter the low power idle (LPI) state. In the LPI state, an unused circuit of a chip is disabled as much as possible to reduce power consumption. When there is a packet to be sent, a physical layer is in an active state. In this case, traffic can be transmitted normally. When there is no packet to be sent, the physical layer enters a sleep state immediately. In this state, if there is still no packet to be sent, the physical layer enters a quiet state. To ensure that parameters at two ends are updated synchronously, the physical layer enters a refresh phase at an interval. Power consumption can be reduced only in a quiet phase. Power consumption in the sleep or refresh state is equivalent to that in the active state.

The problem of the EEE is that power consumption may not be well reduced even under a low load. The EEE has wake-up overheads when the physical layer is switched from a low power idle state to a working state. For traffic that arrives intermittently (Poisson distribution), the physical layer may keep being in a wake-up+active+sleep cycle phase. Therefore, power consumption in a low load condition is equivalent to that in a normal working state. Especially, if packets arrive at an equal interval, and the interval is not enough for entering the low power idle state, the EEE cannot reduce the power consumption.

Specifically, when there is a packet to be sent, the physical layer is in the active state. In this case, traffic can be transmitted normally. When there is no packet to be sent, the physical layer enters the sleep state immediately. In this state, if there is still no packet to be sent, the physical layer enters the quiet state, namely the low power idle state. To ensure that the parameters at the two ends are updated synchronously, the physical layer enters the refresh phase at an interval. If there is no data to be sent, the physical layer enters the quiet state again. After time of the quiet state ends, the physical layer enters the refresh state again. After the quiet state ends, if there is data to be sent, the physical layer enters a wake-up state. After wake-up is completed, the physical layer enters the active state to send a data packet. In the foregoing state switching, power consumption of the physical layer can be reduced only in the quiet state. Power consumption in the sleep/refresh state is equivalent to that in the active state. However, after the quiet phase, if a data frame arrives, the physical layer enters the wake-up state, and then enters the active state. After sending is completed, the physical layer enters the sleep state. However, if a data frame arrives after a sleep phase, the physical layer enters the wake-up state again, and then enters the active state. Therefore, in this case, the physical layer fails to enter the quiet state. Therefore, using the EEE in this case cannot reduce power consumption.

A technical problem to be resolved by this application includes how to achieve, in a low load condition, an energy-saving effect independent of a traffic arrival mode. A state of a physical layer is managed based on a time slice, so that a time when the physical layer is in a low power idle state is controllable, and uncertainty of traffic-based triggering is reduced.

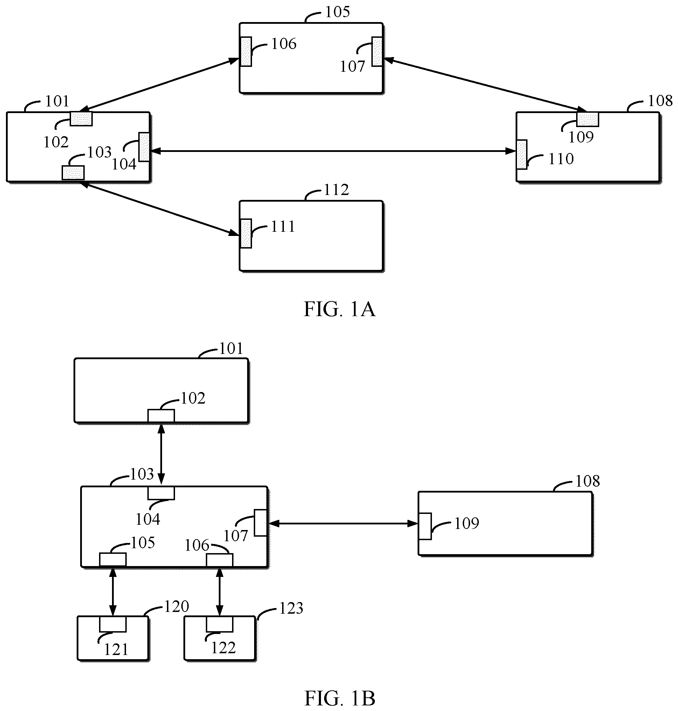

Refer to FIG. 1A. FIG. 1A is an example scenario in which some example embodiments of the present disclosure may be implemented. As shown in FIG. 1A, a data transmission network is formed among network devices 105, 101, 108, and 112. The solutions of this application may be implemented on transceiver modules 106, 107, 109, 110, 111, 104, 103, and 102 that are on the network devices 105, 101, 108, and 112.

Refer to FIG. 1B. FIG. 1B is a scenario in which an embodiment according to this application may be applied. As shown in FIG. 1B, there is a data transmission network among a CPU device 101, a switch device 103, an Ethernet device 108, a storage device 120, and a graphics processing device 123. The solutions of this application may be applied to a transceiver module 102 of the CPU device 101, transceiver modules 104, 104, 106, and 107 of the switch device 103, a transceiver module 109 of the Ethernet device 108, a transceiver module 121 of the storage device 120, and a transceiver module 122 of the graphics processor 123.

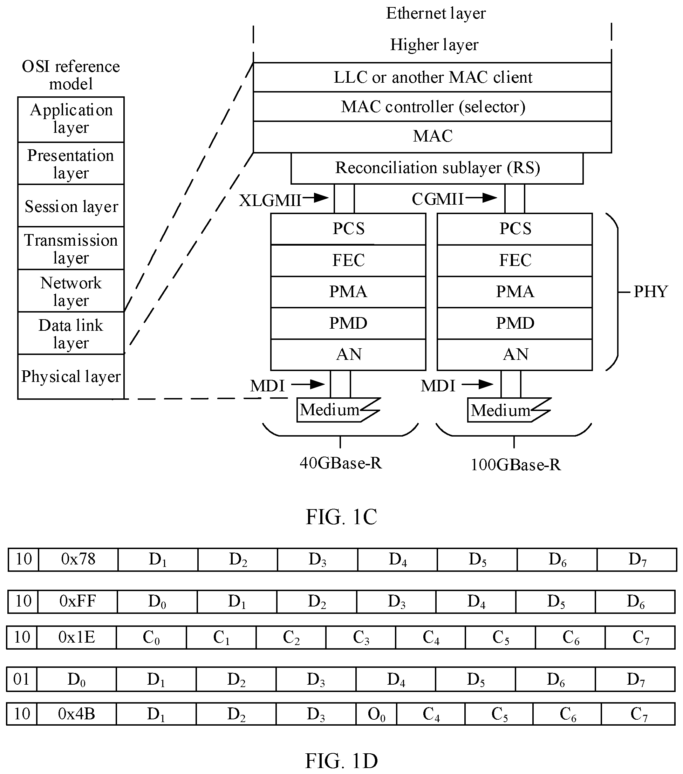

Refer to FIG. 1C. FIG. 1C is a diagram of possible processing at a physical layer according to this application. As shown in FIG. 1C, after an Ethernet packet enters a medium access control (medium access control, MAC) layer/reconciliation sublayer (reconciliation sublayer, RS), the packet is checked and encoded based on a medium independent interface (medium independent interface, MII) requirement, and is sent to a physical coding sublayer (physical coding sublayer, PCS) through an xMII. The PCS receives xMII information sent through some kinds of MIIs (some kinds of MIIs, xMII), and performs bit code block coding and rate matching. The xMII is usually used between a MAC layer of an Ethernet device and the physical layer. In some embodiments, the xMII exists in an integrated circuit. The PCS performs coding according to a 64-bit (bit, B)/66B rule to form a serial stream. Then, the PCS sends a 64B/66B code block to an FEC layer (the FEC layer at a receive end decodes a received signal, finds an error code generated in a transmission process, and corrects the error code; and when the FEC layer cannot correct the error code, a code block converted from the code word is marked as an E code block). After FEC coding, a data stream may be sent to a second device through a physical medium attachment (physical medium attachment, PMA) sublayer and a physical medium dependent (physical medium dependent, PMD) sublayer.

The IEEE 802.3 standardized code pattern definition for 64B/66B coding as follows: 2 bits "10" or "01" are a synchronization header located at a block header, and last 64 bits are used to carry payload data or a protocol. Control code blocks such as an S code block and a T7 code block, an idle code block (C0 to C7 are 0) or a low power idle code block (C0 to C7 are 6), and a data code block D are shown in FIG. 1D.

In 64B/66B coding, 64-bit data or control information is coded into a 66-bit block for transmission. First 2 bits of the 66-bit block represent a synchronization header, and last 64 bits may be referred to as a data payload. The synchronization header may be "01" or "10". In a data code block, the synchronization header is "01", and 64 bits after the synchronization header are data. In a control code block, the synchronization header is "10", and 64 bits after the synchronization header include data and/or control information. In the control code block, first 8 bits in a data load, namely 8 bits adjacent to the synchronization header, are a type field, and may indicate a type of the control code block. Last 56 bits in the data load, namely 56 bits after the type field, are control information and/or data. In a 64B/66B code block, D represents a data byte, and each data byte is 8 bits; C represents a control byte, and each control byte is 7 bits; and O represents an ordered set control code block (for example, a type is 0x4B, and different values of O indicate different application scenarios). S only appears in 0th and 4th bytes of 8 bytes, and T can appear in any byte. A code block including S may be referred to as an S code block, and a code block including T may be referred to as a T code block. C0 to C7 in an idle (idle) code block are 0, and C0 to C7 in a low power idle (LPI) code block are 6. When there is a packet to be sent at the MAC layer, an Ethernet physical layer sends an SDD..T code block stream. When there is no packet to be sent at the MAC layer, the Ethernet physical layer sends an IDLE code block stream.

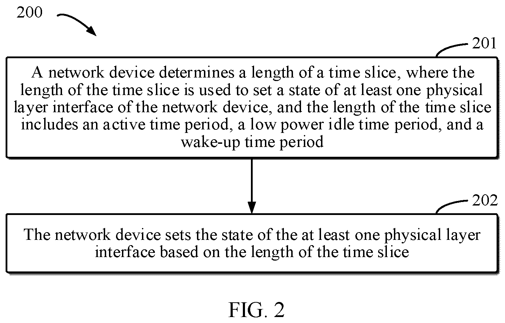

Refer to FIG. 2. FIG. 2 is a flowchart of an energy-saving method according to a possible implementation of this application. A method procedure of the energy-saving method may include the following steps, and is not limited to procedure steps shown in FIG. 2. The energy-saving method may further include fewer or more procedure steps, and an implementation sequence of the included procedure steps is not limited in this embodiment.

201: A network device determines a length of a time slice, where the length of the time slice is used to set a state of at least one physical layer interface of the network device, and the length of the time slice includes an active time period, a low power idle time period, and a wake-up time period. The physical layer interface is in a working state in the active time period, the physical layer interface is in a low power idle state in the low power idle time period, and the wake-up time period is used for the physical layer interface to switch from the low power idle state to the working state.

202: The network device sets the state of the at least one physical layer interface based on the length of the time slice.

The technical solutions of this application relate to a send side. A network device determines a length of a time slice, where the length of the time slice is used to set a state of at least one physical layer interface of the network device, the length of the time slice includes an active time period, a low power idle time period, and a wake-up time period, the physical layer interface is in a working state in the active time period, the physical layer interface is in a low power idle state in the low power idle time period, and the wake-up time period is used for the physical layer interface to switch from the low power idle state to the working state; and the network device sets the state of the at least one physical layer interface based on the length of the time slice.

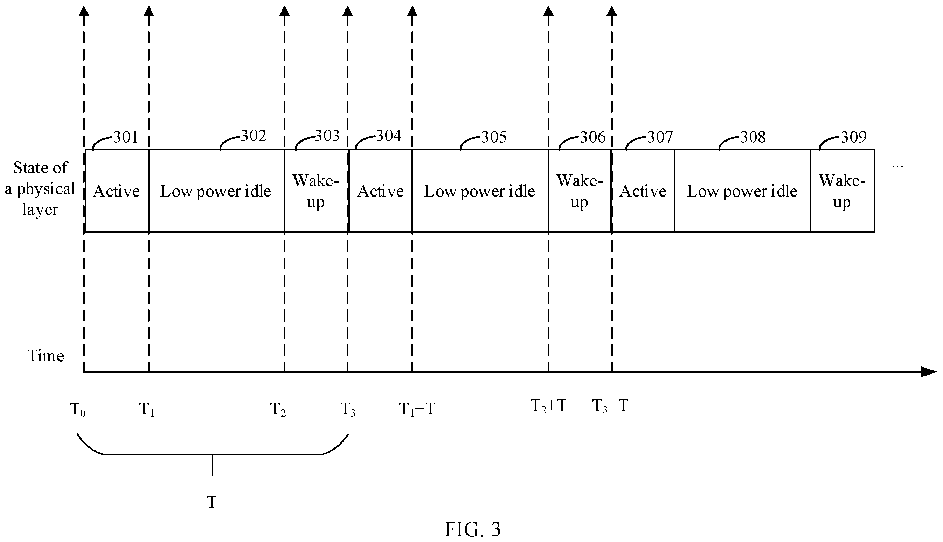

Refer to FIG. 3. FIG. 3 is a diagram of time slice switching according to a possible implementation of this application. As shown in FIG. 3, in some embodiments of this application, a state of a physical layer is managed based on a time slice, so that a time when the physical layer is in a low power idle state is controllable, and uncertainty of traffic-based triggering is reduced. A working state of the physical layer is cyclic in time slices T. In active time, the physical layer is in the working state and is allowed to send traffic. In a low power idle time period, the physical layer is in the low power idle state. In a wake-up time period, the physical layer is in the working state, and IDLE is sent to quickly wake up the physical layer. Specifically, a network device sets a time when the physical layer is in an active state to a time period from T0 to T1, sets a time when the physical layer is in the low power idle state to a time period from T1 to T2, and sets the wake-up time period to

EP 4 607 855 A1

a time period from T2 to T3. In some embodiments, the three time periods together form the time slice T of the physical layer. The network device sets the state of the physical layer based on a length of the foregoing time slice.

First, the physical layer is first in an active 301 state, and enters a low power idle 302 state when a time point T1 arrives. When a time point T2 arrives, the physical layer enters the wake-up time period, and enters the active state again at a time point T3. In some examples, the network device cyclically sets a state of a physical layer interface based on lengths of a plurality of time slices, where the length of the time slice is one of the lengths of the plurality of time slices. As shown in FIG. 3, in a next time slice, a length of each time slice is the same as a length of a first time slice. At a time point T1+T, the physical layer ends an active time period 704 and enters a low power idle time period 305. At a time point T2+T, the physical layer ends the low power idle time period 305 and enters a wake-up time period 306. At a time point T3+T, the physical layer ends the wake-up time period 306 and enters an active time period 307 in a next time slice. Similarly, the physical layer enters a low power idle time period 308 after ending the active time period 307. The physical layer enters a wake-up time period 309 after ending the low power idle time period 308.

In some embodiments, the network device configures lengths of an active time period, a low power idle time period, and a wake-up time period of each of the plurality of time slices based on a rate of the physical layer interface; and for each time period of the plurality of time slices, the network device sets the state of the physical layer interface based on the active time period, the low power idle time period, and the wake-up time period.

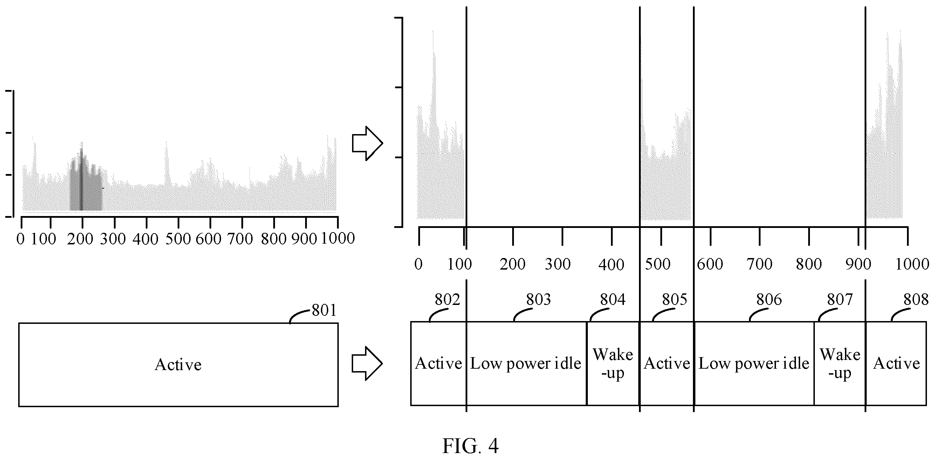

Refer to FIG. 4. FIG. 4 is a diagram of time slice adjustment according to a possible implementation of this application. As shown in the left part of FIG. 4, when the technical solutions of this application are not applied, a physical layer remains in an active state when continuously receiving data, and an energy-saving effect cannot be achieved. After the technical solutions of this application are applied, as shown in the right part of FIG. 4, a network device sets a length of each time period in each time slice based on a rate of a physical layer interface, so that data is sent in an active time period of one time slice, and no data is sent in a low power idle phase and a wake-up phase, to achieve an energy-saving effect. Specifically, the physical layer first enters an active time period 402. A length of the active time period 402 is set based on a rate of the physical layer, to ensure that corresponding data can be completely sent in the active phase 402. Then, the physical layer enters a low power idle state 403. After the low power idle state 403 ends, the physical layer enters a wake-up state 404. After the wake-up state 404 ends, the physical layer enters an active state 405 of a next time slice to send data. Similarly, after the active state 405 ends, the physical layer enters a low power idle state 406. After the low power idle state 406 ends, the physical layer enters a wake-up state 407. After the wake-up state 407 ends, the physical layer enters an active state 408 of a next time slice. In some embodiments, each of a plurality of time slices has a same length.

In some embodiments, if the network device determines that a length of a last time slice in lengths of a plurality of time slices ends, the network device adjusts a length of an active time period, a low power idle time period, or a wake-up time period in a time slice based on a traffic load; and the network device configures a working state of the physical layer interface based on an adjusted length of the active time period, the low power idle time period, or the wake-up time period.

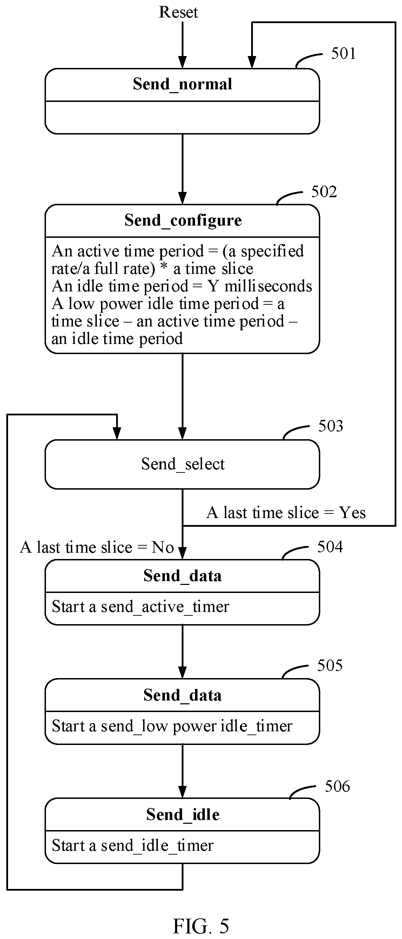

As shown in FIG. 5, FIG. 5 is a diagram of state machine switching in an energy-saving method according to a possible implementation of this application. A physical layer first enters a send_normal state 501, and then enters a send_configure state 502. In some embodiments, a network device sets a second ratio of an active time period in a time slice based on a first ratio of a traffic load of one physical layer interface to a rate of the physical layer interface. Specifically, in the send_configure state, the physical layer configures an active time period based on a specified rate, a full rate, and a length of a time slice, where the active time period = (the specified rate/the full rate) * the time slice. In some embodiments, the first ratio is the same as the second ratio, or the first ratio is less than the second ratio.

In some embodiments, an idle time period is fixed Y milliseconds. A low power idle time period is a time remaining after the active time period and the idle time period are subtracted from the time slice. Specifically, the low power idle time period = the time slice - the active time period - the idle time period. After a length of each time period is determined, the physical layer enters a send_select state 503. Then, it is determined whether a current time slice is a last time slice. If the current time slice is not the last time slice, the physical layer enters a send_data state 504, and starts a send_active_timer, where a length of the timer is set based on a length of the active time period. After the send_data state 504 ends, the physical layer enters a send_low power idle state 505, and starts a send_low power idle_timer. At the end of the send_low power idle state 505, the physical layer enters a send_idle state 506, and starts a send_idle_timer. After the send_idle state 506 ends, the physical layer returns to the send_select state 503. In this way, circulation is performed, until the last time slice ends. That is, it is determined that the current time slice is the last time slice, and a state machine returns to the send_normal state 501.

In some embodiments, that the network device sets a state of at least one physical layer interface based on the length of the time slice includes: The network device configures a time period with traffic as corresponding to the active time period; and the network device configures a time period without traffic as corresponding to the low power idle time period and/or a wake-up time period.

According to the foregoing technical solution, a state of a physical layer may be triggered to change based on time, so that a time when the physical layer is in a low power idle state is controllable, and uncertainty of traffic-based triggering is reduced. Compared with an existing solution, for traffic that arrives intermittently, the physical layer may be kept in a working state as much as possible, thereby reducing power consumption. In addition, duration that the physical layer is in the working state is adjusted based on a traffic load, so that power consumption increases proportionally with traffic; and a traffic mode is adapted to the state of the physical layer as much as possible by means such as traffic control. When there is traffic, the traffic mode corresponds to the working state of the physical layer, and when there is no traffic, the traffic mode corresponds to the low power idle state of the physical layer, thereby maximizing power saving.

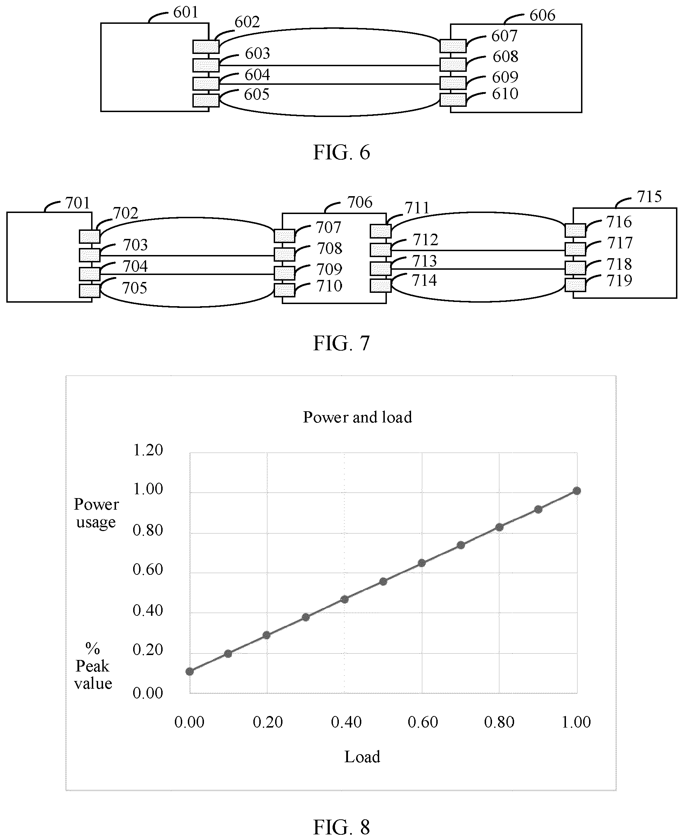

The foregoing technical solution of this application may be applied to a network in which two devices are connected based on an Ethernet technology. Refer to FIG. 6. FIG. 6 is a diagram of a possible system architecture according to an embodiment of this application. As shown in FIG. 6, a system includes a network that includes a head end node 601 and a tail end node 606. The head end node 601 includes transceiver modules 602, 603, 604, and 605. The tail end node 606 includes transceiver modules 607, 608, 609, and 610. The technical solutions of this application may be applied to the foregoing transceiver modules.

The foregoing technical solution of this application is also used as a link technology, a larger-scale network may be formed, and the technical solution of this application is applied between adjacent nodes. Refer to FIG. 7. FIG. 7 is a diagram of a system architecture according to another possible implementation of this application. As shown in FIG. 7, a system includes a network that includes nodes 701, 702, and 703. The node 701 includes transceiver modules 702, 703, 704, and 705. The node 706 includes transceiver modules 707, 708, 709, 710, 711, 712, 713, and 714. An end node 715 includes transceiver modules 716, 717, 718, and 719. The technical solutions of this application may be applied to the foregoing transceiver modules.

Table 1 Parameter configuration

| Parameter | Parameter description | Value |
|---|---|---|
| $B_p$ | Rate of a physical layer | Currently, 100G, 10G, and 1G are considered |
| $B_t$ | Bandwidth required by traffic | $B_p$ may be divided into several grades |
| $S_r$ | Buffer size required to be increased | $B_t \cdot (T_{lpi} + T_w)$ |
| $D_r$ | Increased delay | $T_{lpi} + T_w$ |
| $T$ | Granularity of a time unit | $T_a + T_{lpi} + T_w = (X + 1) \cdot T_w$ |
| $T_a$ | Duration of an active phase in a time unit | Depending on a traffic volume, and being $\frac{B_t}{B_p} \cdot T$ |
| $T_{lpi}$ | Duration of a low power idle phase in a time unit | When there is no traffic, X times of Tw is required, where $X \geq 100$ |
| $T_w$ | Duration of a wake-up phase in a time unit | 16.5 $\mu$s for 1GBASE-T<br>7.36 $\mu$s for 10GBASE-T<br>5.5 $\mu$s for 100GBASE-KR4 |
| $P_{lpi}$ | Power consumption in a low power idle phase | 10% of power consumption in a working phase |
| $P_{work}$ | Power consumption in a working phase | 1GBASE-T 0.5 w, 10GBASE-T 2 w, 100GBASE-KR4 1 w |
| $P_{buf}$ | Power consumption per unit cache | 0.12 w per 1 Mb |

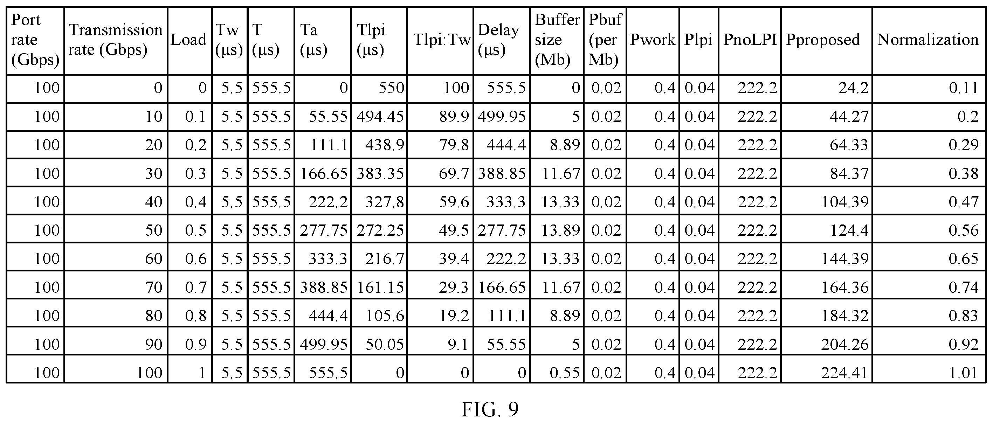

Refer to FIG. 8. FIG. 8 is a diagram of a relationship between power consumption and a load according to an embodiment of this application. A horizontal axis represents a ratio of a load, and a vertical axis represents a ratio of power usage to a peak power. After the technical solutions of this application are applied in 100GBASE-KR4, a relationship between power consumption and a load is shown in FIG. 8. Refer to FIG. 9. FIG. 9 shows specific different parameters and specific values of corresponding powers in the 100GBASE-KR4. In the table in FIG. 9, the first column is a port rate, which is 100 Gbps in this embodiment. The second column is a transmission rate required by traffic, which has a minimum value of 0 Gbps and a maximum value of 100 Gbps. For example, the table shows a case in which the value increases from 0 Gbps to 100 Gbps by an increment of 10 Gbps. The third column is a load, namely a ratio of the transmission rate required by traffic to the port rate. The fourth column is duration of a wake-up phase in a time unit. The duration uses a value given in a specification in an IEEE 802.3 table, and is a fixed value 5.5 $\mu$s in this embodiment. The fifth column is a granularity of a time unit. In this embodiment, the granularity is a fixed value 555.50 $\mu$s, to ensure that a ratio of a length of a low power idle time period to a length of a wake-up time period is 100: 1 in a zero traffic condition, thereby achieving a good energy-saving effect. The sixth column is duration of an active phase in a time unit. A specific calculation method of the duration is multiplying the load by the granularity of the time unit. It can be seen that, as the load increases, the duration of the active time period increases correspondingly, to ensure data sending. The seventh column is duration of a low power idle phase in a time unit. The low power idle phase, the wake-up phase, and a working phase form a time unit. Therefore, when duration of the working phase increases, the duration of the low power idle phase correspondingly decreases. The eighth column is a ratio of the low power idle phase to the wake-up phase. It can be seen that, as the load increases, the ratio decreases, and an effect of reducing power consumption correspondingly deteriorates. The ninth column is a delay, namely a data transmission delay caused by failing to send data in the low power idle time period and the wake-up time period. It can be seen that, as the transmission rate, the load, and the duration of the active phase increase, the delay decreases. The tenth column is a buffer size required in the low power idle phase and the wake-up phase, which is used to buffer data that needs to be sent and that is received from a higher layer in the low power idle time period and the wake-up time period. It can be seen that the buffer size increases at the beginning, and when the rate reaches an intermediate value, the buffer size starts to decrease. The eleventh column is power consumption per Mb of DRAM buffer, which is a fixed value 0.02 in this embodiment. The twelfth column is power consumption in the working phase, which is a fixed value 0.4. The thirteenth column is power consumption in the low power idle phase, which is 10% of the power consumption in the working phase, namely 0.04. The fourteenth column is power consumption in a case in which there is no low power idle phase, that is, in a case in which the technical solutions of this application are not applied. It can be seen that the power consumption is basically a maximum value, and there is no energy-saving effect. The fifteenth column is power consumption in a case in which the technical solutions of this application are applied. It can be seen that the power consumption linearly increases with the load, thereby achieving a good energy-saving effect. The sixteenth column is a result obtained by performing normalization on the fifteenth column based on the fourteenth column.

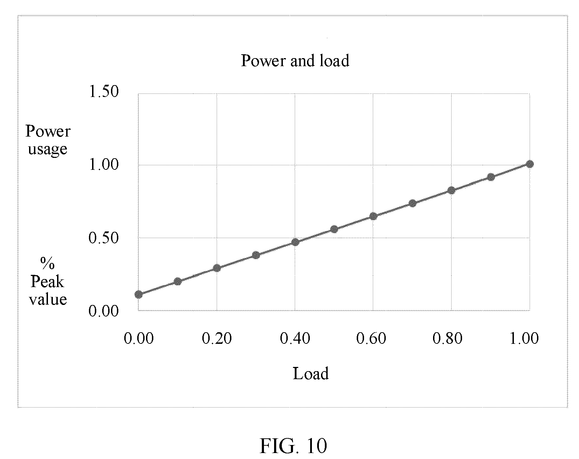

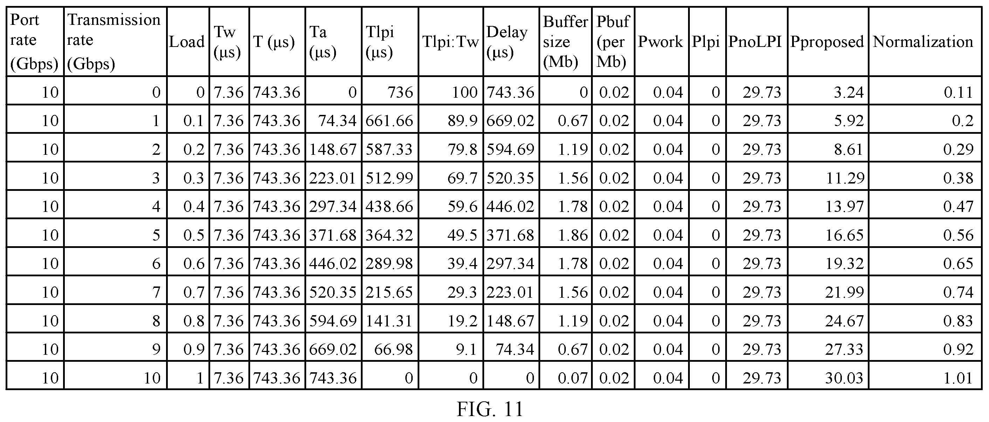

Refer to FIG. 10. FIG. 10 is a diagram of a relationship between power consumption and a load according to another embodiment of this application. A horizontal axis represents a ratio of a load, and a vertical axis represents a ratio of power usage to a peak power. After the technical solutions of this application are applied in 10GBASE-T, a relationship between power consumption and a load is shown in FIG. 10. Refer to FIG. 11. FIG. 11 shows specific different parameters and specific values of corresponding powers in 10GBASE-T. Meanings of columns in the table are consistent with those in FIG. 9. A difference is that a port rate in FIG. 11 is 10 Gbps. It can be seen that, when a load increases linearly, power consumption also increases linearly.

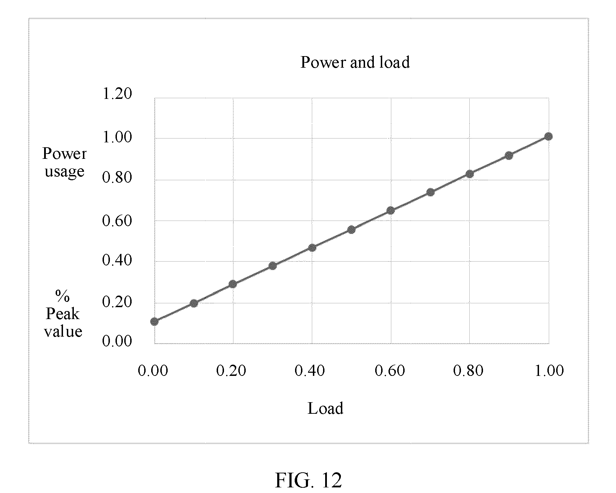

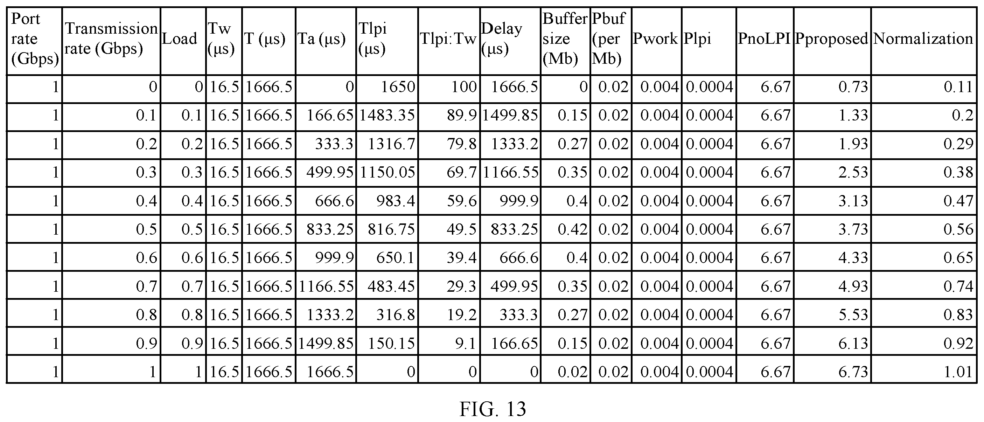

Refer to FIG. 12. FIG. 12 is a diagram of a relationship between power consumption and a load according to still another embodiment of this application. A horizontal axis represents a ratio of a load, and a vertical axis represents a ratio of power usage to a peak power. After the technical solutions of this application are applied in 1GBASE-T, a relationship between power consumption and a load is shown in FIG. 12. Refer to FIG. 13. FIG. 13 shows specific different parameters and specific values of corresponding powers in 1GBASE-T. Meanings of columns in the table are consistent with those in FIG. 9. A difference is that a port rate in FIG. 11 is 1 Gbps. It can be seen that, when a load increases linearly, power consumption also increases linearly.

It should be noted that the foregoing embodiments are some implementations provided in this application, and are merely intended to describe the technical solutions of this application more clearly, but do not constitute a limitation on another embodiment of this application. In another embodiment, more or fewer procedures or steps, more or fewer components, more or fewer service functions, different scheduling policies, and the like may be further included. This is not limited herein. A person of ordinary skill in the art may learn that, with evolution of a network architecture and emergence of a new service scenario, the technical solutions provided in this application are also applicable to resolving similar technical problems.

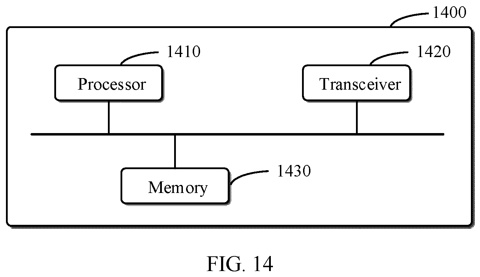

FIG. 14 is a simplified block diagram of a device 1400 appropriate for implementing an embodiment of the present disclosure. For example, the device 1400 may be used in the architecture shown in FIG. 1A, and is configured to implement the network devices 101, 105, 108, and 112, to perform operations of a method 200. The device 1400 may be, for example, the network device in the network architecture shown in FIG. 1A or FIG. 1B, or may be a line card or a chip that implements a related function. As shown in FIG. 14, the device 1400 includes a transceiver 1420, a processor 1410 coupled to the transceiver 1420, and a memory 1430. The transceiver 1420 is specifically configured to perform an information receiving or sending operation performed in the foregoing method 200. The processor 1410 is configured to perform processing or an operation other than receiving or sending information in the foregoing method 200. The memory 1430 is configured to store data or another configuration in the foregoing method 200.

In some embodiments, the transceiver 1420 may be one interface, or may be a plurality of logically bonded interfaces. The interface may be, for example, an interface between a physical layer and a transmission medium layer, such as a medium dependent interface (medium dependent interface, MDI). For example, the interface may alternatively be a physical interface of the network device. In some embodiments, a processor 1810 may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. In some embodiments, the processor 1410 may alternatively be a central processing unit (English:

central processing unit, CPU for short), a network processor (English: network processor, NP for short), or a combination of a CPU and an NP. In some embodiments, the processor 1410 may be one processor, or may include a plurality of processors. In some embodiments, the memory 1430 may include a volatile memory (English: volatile memory), for example, a random-access memory (English: random-access memory, RAM for short). The memory may further include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). In some embodiments, the memory 1420 may further include a combination of the foregoing types of memories. The memory 1430 described in the present disclosure may be n independent memories. The n memories may alternatively be integrated into one or more memories. In this case, the memories may be understood as different storage areas in a corresponding memory.

In some embodiments, the transceiver 1420, the processor 1410, and the memory 1430 may be independent physical units. The processor 1410 and the memory 1430 may be integrated together and implemented by using hardware. In some embodiments, the transceiver 1420 may alternatively be integrated with the processor 1410 and the memory 1430, and is implemented by using hardware. The hardware may be, for example, an ASIC, a PLD, or a combination thereof. The PLD may be a CPLD, an FPGA, generic array logic GAL, or any combination thereof.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is enabled to perform the method and function in any one of the foregoing embodiments.

An embodiment of this application further provides a computer-readable storage medium, where the computer-readable storage medium stores computer instructions or program code. When a processor runs the instructions or the program code, the processor is enabled to perform the method and the function in any one of the foregoing embodiments. The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. The computer-readable storage medium may be any usable medium accessible by the computer, or a data storage device, like a server or a data center that integrates one or more usable media. More detailed examples of the computer-readable storage medium include an electrical connection with one or more wires, a magnetic medium (for example, a magnetic disk, a floppy disk, a hard disk drive, a magnetic tape, or a magnetic storage device), an optical medium (for example, an optical storage device or a DVD), a semiconductor medium (for example, a solid state drive), a random access memory (RAM), a read-only memory (ROM), an erasable programmable read-only memory (EPROM or flash memory), or any suitable combination thereof.

All or some of the foregoing embodiments may be implemented by using software, hardware, firmware, or any combination thereof. When software is used to implement the embodiments, all or a part of the embodiments may be implemented in a form of a computer program product. An embodiment of this application further provides at least one computer program product that is tangibly stored on a non-transitory computer-readable storage medium. The computer program product includes one or more computer-executable instructions, for example, instructions included in a program module, and the instructions are executed in a device on a target real or virtual processor, to perform a process, a method, and a function in any one of the foregoing embodiments. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner.

Based on the method provided in embodiments of this application, this application further provides a computer program product. The computer program product includes computer program code. When the computer program code is run on a computer, the computer is enabled to perform the process, the method, and the function in the foregoing embodiments. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code used for implementing the method in the present disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server. In a context of the present disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of the present disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

The foregoing has described various implementations of the present disclosure. The foregoing descriptions are examples, are not exhaustive, and are not limited to the disclosed implementations. Many modifications and changes are apparent to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

In the foregoing specific implementations, the objectives, the technical solutions, and the benefits of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions in embodiments of this application shall fall within the protection scope of embodiments of this application.

It should be noted that although the foregoing describes embodiments of this application with reference to the accompanying drawings, the foregoing embodiments are not independent of each other, and may also be combined to obtain another embodiment. Division of manners, cases, categories, and embodiments in embodiments of this application is merely for ease of description, and shall not constitute a special limitation. Various manners, categories, cases, and features in embodiments may be combined with each other provided that they comply with logic. The implementations of this application may be randomly combined, to achieve different technical effects. Various combinations are not listed in embodiments of this application.

In addition, although the operations of the methods in the present disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to the present disclosure may be specific in one apparatus. Instead, features and functions of one apparatus described above may be further specific in a plurality of apparatuses.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

**Claims**

1. A power consumption management method, comprising:

    determining, by a network device, a length of a time slice, wherein the length of the time slice is used to set a state of at least one physical layer interface of the network device, the length of the time slice comprises an active time period, a low power idle time period, and a wake-up time period, the physical layer interface is in a working state in the active time period, the physical layer interface is in a low power idle state in the low power idle time period, and the wake-up time period is used for the physical layer interface to switch from the low power idle state to the working state; and

setting, by the network device, the state of the at least one physical layer interface based on the length of the time slice.

2. The method according to claim 1, wherein the length of the time slice is equal to a sum of the active time period, the low power idle time period, and the wake-up time period.

3. The method according to claim 1 or 2, wherein the setting the state of the at least one physical layer interface comprises:
cyclically setting, by the network device, the state of the physical layer interface based on lengths of a plurality of time slices, wherein the length of the time slice is one of the lengths of the plurality of time slices.

4. The method according to claim 3, wherein the cyclically setting the state of the physical layer interface based on a plurality of time slices comprises:

configuring, by the network device, lengths of an active time period, a low power idle time period, and a wake-up time period of each of the plurality of time slices based on a rate of the physical layer interface; and
setting, by the network device for each time period of the plurality of time slices, the state of the physical layer interface based on the active time period, the low power idle time period, and the wake-up time period.

5. The method according to claim 3, wherein each of the plurality of time slices has a same length.

6. The method according to claim 4, further comprising:

if the network device determines that a length of a last time slice in the lengths of the plurality of time slices ends, adjusting, by the network device, the length of the active time period, the low power idle time period, or the wake-up time period in the time slice based on a traffic load; and
configuring, by the network device, the working state of the physical layer interface based on an adjusted length of the active time period, the low power idle time period, or the wake-up time period.

7. The method according to claim 6, wherein the adjusting, by the network device, the active time period in the time slice based on a traffic load comprises:
setting a second ratio of the active time period in the time slice based on a first ratio of a traffic load of one physical layer interface of the network device to the rate of the physical layer interface.

8. The method according to claim 7, wherein the first ratio is the same as the second ratio, or the first ratio is less than the second ratio.

9. The method according to claim 1, wherein the setting, by the network device, the state of the at least one physical layer interface based on the length of the time slice comprises at least one of the following:

configuring, by the network device, a time period with traffic as corresponding to the active time period; and
configuring, by the network device, a time period without traffic as corresponding to the low power idle time period and/or the wake-up time period.

10. A network device, comprising:

at least one processor; and
at least one memory, wherein the at least one memory is coupled to the at least one processor and stores instructions that are used to be executed by the at least one processor, and when the instructions are executed by the at least one processor:

the network device is enabled to determine a length of a time slice, wherein the length of the time slice is used to set a state of at least one physical layer interface of the network device, the length of the time slice comprises an active time period, a low power idle time period, and a wake-up time period, the physical layer interface is in a working state in the active time period, the physical layer interface is in a low power idle state in the low power idle time period, and the wake-up time period is used for the physical layer interface to switch from the low power idle state to the working state; and

the network device is enabled to set the state of the at least one physical layer interface based on the length of the time slice.

11. The network device according to claim 10, wherein the length of the time slice is equal to a sum of the active time period, the low power idle time period, and the wake-up time period.

12. The network device according to claim 10 or 11, wherein setting the state of the at least one physical layer interface comprises:

cyclically setting, by the network device, the state of the physical layer interface based on lengths of a plurality of time slices, wherein the length of the time slice is one of the lengths of the plurality of time slices.

13. The network device according to claim 12, wherein the cyclically setting the state of the physical layer interface based on lengths of a plurality of time slices comprises:

configuring, by the network device, an active time period, a low power idle time period, and a wake-up time period of a length of each time slice in the lengths of the plurality of time slices based on a rate of the physical layer interface; and

setting, by the network device for each time period in the lengths of the plurality of time slices, the state of the physical layer interface based on the active time period, the low power idle time period, and the wake-up time period.

14. The network device according to claim 12, wherein each of the plurality of time slices has a same length.

15. The network device according to claim 13, further comprising:

if the network device determines that a length of a last time slice in the lengths of the plurality of time slices ends, adjusting, by the network device, a length of the active time period, the low power idle time period, or the wake-up time period in the time slice based on a traffic load; and

configuring, by the network device, the working state of the physical layer interface based on an adjusted length of the active time period, the low power idle time period, or the wake-up time period.

16. The network device according to claim 15, wherein the adjusting, by the network device, the active time period in the time slice based on a traffic load comprises:

setting a second ratio of the active time period in the time slice based on a first ratio of a traffic load of one physical layer interface of the network device to the rate of the physical layer interface.

17. The network device according to claim 16, wherein the first ratio is the same as the second ratio, or the first ratio is less than the second ratio.

18. The network device according to claim 1, wherein the setting, by the network device, the state of the at least one physical layer interface based on the length of the time slice comprises at least one of the following:

configuring, by the network device, a time period with traffic as corresponding to the active time period; and configuring, by the network device, a time period without traffic as corresponding to the low power idle time period and/or the wake-up time period.

19. A computer-readable storage medium, wherein the computer-readable storage medium stores instructions, and when the instructions are executed by an electronic device, the electronic device is enabled to perform the method according to any one of claims 1 to 9.

20. A computer program product, wherein the computer program product comprises instructions, and when the instructions are executed by an electronic device, the electronic device is enabled to perform the method according to any one of claims 1 to 9.

FIG. 1A

FIG. 1B

Ethernet layer

Higher layer

OSI reference model

| | |
|---|---|
| Application layer | |
| Presentation layer | |
| Session layer | |
| Transmission layer | |
| Network layer | |
| Data link layer | |
| Physical layer | |

LLC or another MAC client

MAC controller (selector)

MAC

Reconciliation sublayer (RS)

XLGMII→          CGMII→

| PCS | PCS |
|---|---|
| FEC | FEC |
| PMA | PMA |
| PMD | PMD |
| AN | AN |

PHY

MDI →          MDI →

Medium          Medium

40GBase-R          100GBase-R

FIG. 1C

| 10 | 0x78 | $D_1$ | $D_2$ | $D_3$ | $D_4$ | $D_5$ | $D_6$ | $D_7$ |
|---|---|---|---|---|---|---|---|---|

| 10 | 0xFF | $D_0$ | $D_1$ | $D_2$ | $D_3$ | $D_4$ | $D_5$ | $D_6$ |
|---|---|---|---|---|---|---|---|---|

| 10 | 0x1E | $C_0$ | $C_1$ | $C_2$ | $C_3$ | $C_4$ | $C_5$ | $C_6$ | $C_7$ |
|---|---|---|---|---|---|---|---|---|---|

| 01 | $D_0$ | $D_1$ | $D_2$ | $D_3$ | $D_4$ | $D_5$ | $D_6$ | $D_7$ |
|---|---|---|---|---|---|---|---|---|

| 10 | 0x4B | $D_1$ | $D_2$ | $D_3$ | $O_0$ | $C_4$ | $C_5$ | $C_6$ | $C_7$ |
|---|---|---|---|---|---|---|---|---|---|

FIG. 1D

200

201

A network device determines a length of a time slice, where the length of the time slice is used to set a state of at least one physical layer interface of the network device, and the length of the time slice includes an active time period, a low power idle time period, and a wake-up time period

202

The network device sets the state of the at least one physical layer interface based on the length of the time slice

FIG. 2

State of a physical layer

| | 301 | 302 | 303 | 304 | 305 | 306 | 307 | 308 | 309 |
|---|---|---|---|---|---|---|---|---|---|
| | Active | Low power idle | Wake-up | Active | Low power idle | Wake-up | Active | Low power idle | Wake-up |

Time

$T_0$  $T_1$  $T_2$  $T_3$  $T_1+T$  $T_2+T$  $T_3+T$

$T$

FIG. 3

FIG. 4

Reset

**Send_normal**                    501

**Send_configure**                 502

An active time period = (a specified
rate/a full rate) * a time slice
An idle time period = Y milliseconds
A low power idle time period = a
time slice – an active time period –
an idle time period

Send_select                        503

A last time slice = Yes

A last time slice = No

**Send_data**                      504

Start a send_active_timer

**Send_data**                      505

Start a send_low power idle_timer

**Send_idle**                      506

Start a send_idle_timer

FIG. 5

FIG. 6

FIG. 7

FIG. 8

| Port rate (Gbps) | Transmission rate (Gbps) | Load | Tw (µs) | T (µs) | Ta (µs) | Tlpi (µs) | Tlpi:Tw | Delay (µs) | Buffer size (Mb) | Pbuf (per Mb) | Pwork | Plpi | PnoLPI | Pproposed | Normalization |
|---|---|---|---|---|---|---|---|---|---|---|---|---|---|---|---|
| 100 | 0 | 0 | 5.5 | 555.5 | 0 | 550 | 100 | 555.5 | 0 | 0.02 | 0.4 | 0.04 | 222.2 | 24.2 | 0.11 |
| 100 | 10 | 0.1 | 5.5 | 555.5 | 55.55 | 494.45 | 89.9 | 499.95 | 5 | 0.02 | 0.4 | 0.04 | 222.2 | 44.27 | 0.2 |
| 100 | 20 | 0.2 | 5.5 | 555.5 | 111.1 | 438.9 | 79.8 | 444.4 | 8.89 | 0.02 | 0.4 | 0.04 | 222.2 | 64.33 | 0.29 |
| 100 | 30 | 0.3 | 5.5 | 555.5 | 166.65 | 383.35 | 69.7 | 388.85 | 11.67 | 0.02 | 0.4 | 0.04 | 222.2 | 84.37 | 0.38 |
| 100 | 40 | 0.4 | 5.5 | 555.5 | 222.2 | 327.8 | 59.6 | 333.3 | 13.33 | 0.02 | 0.4 | 0.04 | 222.2 | 104.39 | 0.47 |
| 100 | 50 | 0.5 | 5.5 | 555.5 | 277.75 | 272.25 | 49.5 | 277.75 | 13.89 | 0.02 | 0.4 | 0.04 | 222.2 | 124.4 | 0.56 |
| 100 | 60 | 0.6 | 5.5 | 555.5 | 333.3 | 216.7 | 39.4 | 222.2 | 13.33 | 0.02 | 0.4 | 0.04 | 222.2 | 144.39 | 0.65 |
| 100 | 70 | 0.7 | 5.5 | 555.5 | 388.85 | 161.15 | 29.3 | 166.65 | 11.67 | 0.02 | 0.4 | 0.04 | 222.2 | 164.36 | 0.74 |
| 100 | 80 | 0.8 | 5.5 | 555.5 | 444.4 | 105.6 | 19.2 | 111.1 | 8.89 | 0.02 | 0.4 | 0.04 | 222.2 | 184.32 | 0.83 |
| 100 | 90 | 0.9 | 5.5 | 555.5 | 499.95 | 50.05 | 9.1 | 55.55 | 5 | 0.02 | 0.4 | 0.04 | 222.2 | 204.26 | 0.92 |
| 100 | 100 | 1 | 5.5 | 555.5 | 555.5 | 0 | 0 | 0 | 0.55 | 0.02 | 0.4 | 0.04 | 222.2 | 224.41 | 1.01 |

FIG. 9

FIG. 10

| Port rate (Gbps) | Transmission rate (Gbps) | Load | Tw (µs) | T (µs) | Ta (µs) | Tlpi (µs) | Tlpi:Tw | Delay (µs) | Buffer size (Mb) | Pbuf (per Mb) | Pwork | Plpi | PnoLPI | Pproposed | Normalization |
|---|---|---|---|---|---|---|---|---|---|---|---|---|---|---|---|
| 10 | 0 | 0 | 7.36 | 743.36 | 0 | 736 | 100 | 743.36 | 0 | 0.02 | 0.04 | 0 | 29.73 | 3.24 | 0.11 |
| 10 | 1 | 0.1 | 7.36 | 743.36 | 74.34 | 661.66 | 89.9 | 669.02 | 0.67 | 0.02 | 0.04 | 0 | 29.73 | 5.92 | 0.2 |
| 10 | 2 | 0.2 | 7.36 | 743.36 | 148.67 | 587.33 | 79.8 | 594.69 | 1.19 | 0.02 | 0.04 | 0 | 29.73 | 8.61 | 0.29 |
| 10 | 3 | 0.3 | 7.36 | 743.36 | 223.01 | 512.99 | 69.7 | 520.35 | 1.56 | 0.02 | 0.04 | 0 | 29.73 | 11.29 | 0.38 |
| 10 | 4 | 0.4 | 7.36 | 743.36 | 297.34 | 438.66 | 59.6 | 446.02 | 1.78 | 0.02 | 0.04 | 0 | 29.73 | 13.97 | 0.47 |
| 10 | 5 | 0.5 | 7.36 | 743.36 | 371.68 | 364.32 | 49.5 | 371.68 | 1.86 | 0.02 | 0.04 | 0 | 29.73 | 16.65 | 0.56 |
| 10 | 6 | 0.6 | 7.36 | 743.36 | 446.02 | 289.98 | 39.4 | 297.34 | 1.78 | 0.02 | 0.04 | 0 | 29.73 | 19.32 | 0.65 |
| 10 | 7 | 0.7 | 7.36 | 743.36 | 520.35 | 215.65 | 29.3 | 223.01 | 1.56 | 0.02 | 0.04 | 0 | 29.73 | 21.99 | 0.74 |
| 10 | 8 | 0.8 | 7.36 | 743.36 | 594.69 | 141.31 | 19.2 | 148.67 | 1.19 | 0.02 | 0.04 | 0 | 29.73 | 24.67 | 0.83 |
| 10 | 9 | 0.9 | 7.36 | 743.36 | 669.02 | 66.98 | 9.1 | 74.34 | 0.67 | 0.02 | 0.04 | 0 | 29.73 | 27.33 | 0.92 |
| 10 | 10 | 1 | 7.36 | 743.36 | 743.36 | 0 | 0 | 0 | 0.07 | 0.02 | 0.04 | 0 | 29.73 | 30.03 | 1.01 |

FIG. 11

EP 4 607 855 A1

FIG. 12

| Port rate (Gbps) | Transmission rate (Gbps) | Load | Tw (μs) | T (μs) | Ta (μs) | Tlpi (μs) | Tlpi:Tw | Delay (μs) | Buffer size (Mb) | Pbuf (per Mb) | Pwork | Plpi | PnoLPI | Pproposed | Normalization |
|---|---|---|---|---|---|---|---|---|---|---|---|---|---|---|---|
| 1 | 0 | 0 | 16.5 | 1666.5 | 0 | 1650 | 100 | 1666.5 | 0 | 0.02 | 0.004 | 0.0004 | 6.67 | 0.73 | 0.11 |
| 1 | 0.1 | 0.1 | 16.5 | 1666.5 | 166.65 | 1483.35 | 89.9 | 1499.85 | 0.15 | 0.02 | 0.004 | 0.0004 | 6.67 | 1.33 | 0.2 |
| 1 | 0.2 | 0.2 | 16.5 | 1666.5 | 333.3 | 1316.7 | 79.8 | 1333.2 | 0.27 | 0.02 | 0.004 | 0.0004 | 6.67 | 1.93 | 0.29 |
| 1 | 0.3 | 0.3 | 16.5 | 1666.5 | 499.95 | 1150.05 | 69.7 | 1166.55 | 0.35 | 0.02 | 0.004 | 0.0004 | 6.67 | 2.53 | 0.38 |
| 1 | 0.4 | 0.4 | 16.5 | 1666.5 | 666.6 | 983.4 | 59.6 | 999.9 | 0.4 | 0.02 | 0.004 | 0.0004 | 6.67 | 3.13 | 0.47 |
| 1 | 0.5 | 0.5 | 16.5 | 1666.5 | 833.25 | 816.75 | 49.5 | 833.25 | 0.42 | 0.02 | 0.004 | 0.0004 | 6.67 | 3.73 | 0.56 |
| 1 | 0.6 | 0.6 | 16.5 | 1666.5 | 999.9 | 650.1 | 39.4 | 666.6 | 0.4 | 0.02 | 0.004 | 0.0004 | 6.67 | 4.33 | 0.65 |
| 1 | 0.7 | 0.7 | 16.5 | 1666.5 | 1166.55 | 483.45 | 29.3 | 499.95 | 0.35 | 0.02 | 0.004 | 0.0004 | 6.67 | 4.93 | 0.74 |
| 1 | 0.8 | 0.8 | 16.5 | 1666.5 | 1333.2 | 316.8 | 19.2 | 333.3 | 0.27 | 0.02 | 0.004 | 0.0004 | 6.67 | 5.53 | 0.83 |
| 1 | 0.9 | 0.9 | 16.5 | 1666.5 | 1499.85 | 150.15 | 9.1 | 166.65 | 0.15 | 0.02 | 0.004 | 0.0004 | 6.67 | 6.13 | 0.92 |
| 1 | 1 | 1 | 16.5 | 1666.5 | 1666.5 | 0 | 0 | 0 | 0.02 | 0.02 | 0.004 | 0.0004 | 6.67 | 6.73 | 1.01 |

FIG. 13

FIG. 14

## INTERNATIONAL SEARCH REPORT

| International application No. |
|---|
| **PCT/CN2023/126299** |

**A.    CLASSIFICATION OF SUBJECT MATTER**

H04L12/12(2006.01)i

According to International Patent Classification (IPC) or to both national classification and IPC

**B.    FIELDS SEARCHED**

Minimum documentation searched (classification system followed by classification symbols)

IPC:H04L,H04W,H04B

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, 3GPP: 物理层, 接口, 状态, 活跃, 唤醒, 转换, 低功耗, 低功率, physical layer, interface, state, interactive+, wake up, low power

**C.    DOCUMENTS CONSIDERED TO BE RELEVANT**

| Category* | Citation of document, with indication, where appropriate, of the relevant passages | Relevant to claim No. |
|---|---|---|
| X | US 2013089091 A1 (DIAB WAEL; BROADCOM CORPORATION) 11 April 2013 (2013-04-11) <br> description, paragraphs 0009-0027, and claims 1-20 | 1-20 |
| A | CN 103036687 A (BROADCOM CORP.) 10 April 2013 (2013-04-10) <br> entire document | 1-20 |
| A | US 2003167413 A1 (INTEL CORP.) 04 September 2003 (2003-09-04) <br> entire document | 1-20 |
| A | US 2011022699 A1 (POWELL, S.; WANG, P.) 27 January 2011 (2011-01-27) <br> entire document | 1-20 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 January 2024** | **20 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/126299**

| Patent document cited in search report | | | Publication date (day/month/year) | Patent family member(s) | | | Publication date (day/month/year) |
|---|---|---|---|---|---|---|---|
| US | 2013089091 | A1 | 11 April 2013 | None | | | |
| CN | 103036687 | A | 10 April 2013 | TW | 201330671 | A | 16 July 2013 |
| | | | | US | 2013089091 | A1 | 11 April 2013 |
| | | | | EP | 2579654 | A1 | 10 April 2013 |
| US | 2003167413 | A1 | 04 September 2003 | US | 6963985 | B2 | 08 November 2005 |
| US | 2011022699 | A1 | 27 January 2011 | US | 8769082 | B2 | 01 July 2014 |

Form PCT/ISA/210 (patent family annex) (July 2022)